# EUROPÄISCHE PATENTSCHRIFT

(11) **EP 2 555 926 B1**
(45) Veröffentlichungstag und Bekanntmachung des Hinweises auf die Patenterteilung: **12.11.2014**
(21) Anmeldenummer: 11703218.5
(22) Anmeldetag: 10.02.2011
(51) Int. Cl.: B60B 1/06, B60B 3/14, B60B 3/16, B60B 27/00, B60B 35/14, B60T 1/06, F16D 65/02, F16D 65/12

(54) **RADLAGER FÜR EIN FAHRZEUG**
WHEEL BEARING FOR A VEHICLE
PALIER DE ROUE POUR UN VÉHICULE

(30) Priorität: 06.04.2010 DE 102010013937
(43) Veröffentlichungstag der Anmeldung: 13.02.2013
(73) Patentinhaber: Schaeffler Technologies GmbH & Co. KG, 91074 Herzogenaurach (DE)
(72) Erfinder: NIEBLING, Peter, 97688 Bad Kissingen (DE); LANGER, Roland, 97523 Schwanfeld (DE); DLUGAI, Darius, 97421 Schweinfurt (DE)
(86) Internationale Anmeldenummer: PCT/EP2011/051951
(87) Internationale Veröffentlichungsnummer: WO 2011/124407

(56) Entgegenhaltungen:
- WO-A1-2007/121891
- DE-A1- 19 639 729
- DE-U1- 9 314 345
- GB-A- 1 392 172
- US-A- 1 099 770
- US-A- 2 906 558
- US-A- 3 009 742

## Beschreibung

### Gebiet der Erfindung

Die Erfindung betrifft eine Radlager-Baugruppe für ein Fahrzeug, insbesondere eines Kraftfahrzeugs. Ferner betrifft die Erfindung eine zu der Radlager-Baugruppe passende Felge.

### Stand der Technik

Bei herkömmlichen Systemen erfolgt die Befestigung und die Antriebsmomenten-Übertragung auf das Rad über drei bis fünf Befestigungsschrauben. Bei solchen gebräuchlichen Rädern ist allerdings durch die Mehrzahl von Befestigungsschrauben ein erhöhter Montageaufwand vorhanden.

Im Rennsport werden diese Befestigungsschrauben durch Mitnahmebolzen zur Momentenübertragung ersetzt. Die Felgenbefestigung erfolgt hier über eine Zentralschraube. Bei diesem Rennsport-Konzept erfordert das Montageprinzip ein Spiel im Bereich der Mitnahmebolzen an der Radnabe und den Aufnahmebohrungen in der Radfelge. Als Folge können Geräusche und Zentralschrauben-Lockerungseffekte entstehen.

Aus der DE 44 19 198 A1 ist ein Kraftfahrzeugrad beschrieben, dessen die Felge tragender zentrischer Teil mittels einer auf den Radzapfen aufgeschraubten Zentralmutter lösbar mit der Radnabe verbunden ist. Um eine leichte Bauweise sowie eine schnelle Montagemöglichkeit zu erzielen, ist der zentrische Teil des Rades als vorzugsweise aus Stahlblech gefertigte Radscheibe ausgebildet, die mit einem ein Zentralloch umschließenden ringförmigen ebenen Befestigungsbereich an der im Wesentlichen ebenen Stirnfläche der Radnabe anliegt, wobei mindestens drei gleichmäßig über den ringförmigen Befestigungsbereich verteilte Bolzenbohrungen von an der Radnabe befestigten Stehbolzen durchgriffen sind, wodurch die Radscheibe und die Radnabe drehmomentenschlüssig miteinander verbunden sind.

Die DE 196 39 729 A1 und auch die US 3,009,742 beschreiben Radlager-Baugruppen, die eine sogenannte Hirth-Stirnverzahnung aufweisen, mittels derer sowohl eine Zentrierung einer Felge auf der Achse als auch eine spielfreie Momenten-Übertragung von der Achse auf die Felge erreicht werden kann. Der Zentralbereich der Felge kann beispielsweise mittels einer Zentralmutter an der Achse fixiert sein.

Die DE 93 14 345 U1 zeigt eine Radlager-Baugruppe mit den Merkmalen des Oberbegriffs von Anspruch 1.

### Zusammenfassung der Erfindung

Es ist eine Aufgabe der Erfindung, eine Vorrichtung zur Befestigung eines Rades an einer Achse eines Fahrzeuges bereitzustellen, welche eine spielfreie Momentenübertragung zwischen der Achse und dem Rad bereitstellt.

Diese und weitere Aufgaben werden durch die Radlager-Baugruppe gemäß Anspruch 1 gelöst. Weitere bevorzugte Ausführungsformen sind in den abhängigen Ansprüchen beschrieben.

Im Allgemeinen wird die Aufgabe dadurch gelöst, dass eine selbstzentrierende Verzahnung, eine sogenannte Hirth-Verzahnung, verwendet wird, welche die Momentenübertragung im Antriebs- und auch Bremsenfall spielfrei übertragen kann. Die axiale Sicherung der Radfelge erfolgt durch eine Zentral-Verschraubung.

Eine Radlager-Baugruppe für ein Fahrzeug gemäß der Erfindung weist einen Flansch zur axialen Ausrichtung einer Felge und eine Felgenzentrierung zur radialen Zentrierung der Felge auf, wobei an der Radlager-Baugruppe eine Axialverzahnung ausgebildet ist, welche derart angeordnet ist, dass die Axialverzahnung in Eingriff mit einer Verzahnung gebracht werden kann, welche an einem Zentralbereich der Felge ausgebildet ist.

Sobald also eine Felge, welche eine Verzahnung aufweist, die zu der Axialverzahnung korrespondiert, auf den Endabschnitt der Achse, das heißt auf die Felgenzentrierung einer Fahrzeugachse aufgeschoben wird, greift die an der Felge ausgebildete Verzahnung in die entsprechend angeordnete Axialverzahnung an der Radlager-Baugruppe der Achse ein. Sobald die Felge mittels einer Zentral-Verschraubung in axialer Richtung gegen den an der Radlager-Baugruppe befindlichen Flansch gedrückt wird, kann ein spielfreies Ineinandergreifen der Verzahnung mit der Axialverzahnung erreicht werden, womit eine spielfreie Momentenübertragung von der Achse auf das Rad (und umgekehrt) gewährleistet wird.

Gemäß einer Ausführungsform der Erfindung ist die Axialverzahnung an der Radlager-Baugruppe an einer Stirnfläche der Felgenzentrierung ausgebildet. Zur Fixierung der Felge kann hierbei eine Zentral-Verschraubung wie zum Beispiel eine Zentralschraube an der Radlager-Baugruppe mit ihrem Außengewinde in ein Innengewinde eingreifen, welches in der Felgenzentrierung ausgebildet ist.

Gemäß einer Ausführungsform, zum besseren Verständnis der Erfindung, ist die Axialverzahnung der Radlager-Baugruppe an einer in Axialrichtung nach außen gerichteten Fläche des Flansches ausgebildet. Die Axialverzahnung kann in diesem Fall die vollständige nach außen gerichtete Fläche des Flansches oder auch nur einen Teil der Fläche, das heißt einen Ring mit einer kleineren Abmessung in Radialrichtung als derjenigen der Gesamtfläche ausgebildet sein. Eine geeignete Momentenübertragung kann erzielt werden, wenn die Axialverzahnung im radial inneren Bereich der in Axialrichtung nach außen gerichteten Fläche des Flansches ausgebildet ist.

Gemäß einer anderen Ausführungsform, zum besseren Verständnis der Erfindung, weist die Radlager-Baugruppe ferner eine Bremsscheibe mit einem Bremsscheibentopf auf und die Axialverzahnung ist an einer in Axialrichtung nach außen gerichteten Fläche des Bremsscheibentopfes ausgebildet.

Gemäß einer weiteren Ausführungsform, zum besseren Verständnis der Erfindung, weist die Radlager-Baugruppe ferner einen Adapter auf, welcher an dem Flansch befestigt ist, und die Axialverzahnung ist an einer in Axialrichtung nach außen gerichteten Fläche des Adapters ausgebildet.

Sobald eine Felge mit einer Verzahnung, die an dem Zentralbereich der Felge ausgebildet ist, an einer Radlager-Baugruppe montiert ist, und die Verzahnung an der Felge im Eingriff mit der Axialverzahnung an der Radlager-Baugruppe ist, kann die Felge mittels einer Zentral-Verschraubung wie zum Beispiel einer Zentralmutter an der Radlager-Baugruppe fixiert werden, wobei ein Innengewinde einer Zentralmutter in ein Außengewinde eingreift, welches an der Felgenzentrierung ausgebildet sein kann.

Es wird angemerkt, dass der Zentralbereich der Felge auch so gestaltet sein kann, dass die Felge über eine Zentralschraube, wie gemäß der Ausführungsform der Erfindung, an einer Radlager-Baugruppe gemäß einer der anderen Ausführungsformen befestigt werden kann.

Gemäß einem weiteren Aspekt der Erfindung weist eine passende Felge für ein Rad eines Fahrzeuges einen Zentralbereich auf, welcher derart ausgebildet ist, dass die Felge an einem Flansch einer Radlager-Baugruppe in axialer Richtung und an einer Felgenzentrierung der Radlager-Baugruppe in radialer Richtung ausgerichtet werden kann. An dem Zentralbereich der Felge ist eine Verzahnung ausgebildet, welche in Eingriff mit einer an der Radlager-Baugruppe ausgebildeten Axialverzahnung gebracht werden kann.

Die oben beschriebenen Aspekte und weitere Aspekte, Merkmale und Vorteile der Erfindung können ebenfalls aus den Beispielen der Ausführungsformen entnommen werden, welche im Folgenden beschrieben werden.

### Kurze Beschreibung der Zeichnungen

Fig. 1 ist eine isometrische Schnittdarstellung einer Radlager-Baugruppe gemäß der Erfindung zusammen mit einer Felge.
Fig. 2 ist eine isometrische Schnittdarstellung einer nicht erfindungsgemäßen Radlager-Baugruppe gemäß einer zweiten Ausführungsform zusammen mit einer Felge.
Fig. 3 ist eine isometrische Schnittdarstellung einer nicht erfindungsgemäßen Radlager-Baugruppe gemäß einer dritten Ausführungsform zusammen mit einer Felge.
Fig. 4 ist eine isometrische Schnittdarstellung einer nicht erfindungsgemäßen Radlager-Baugruppe gemäß einer vierten Ausführungsform.

### Detaillierte Beschreibung der Ausführungsformen

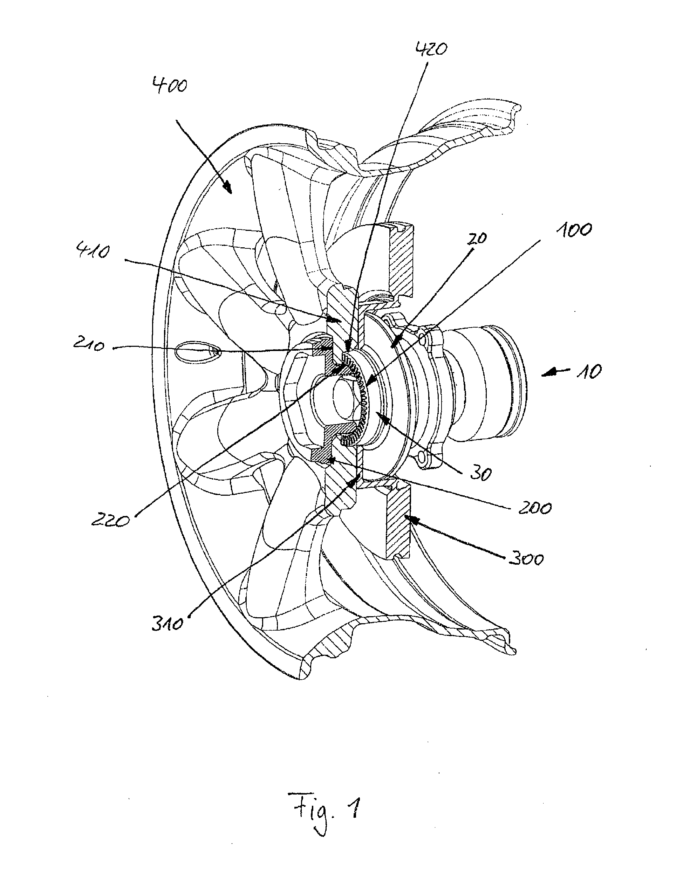

Fig. 1 zeigt eine Radlager-Baugruppe mit einer Achse 10, einem Flansch 20, einer Felgenzentrierung 30 und einer Axialverzahnung 100 auf der Stirnfläche der Felgenzentrierung 30. Die in Axialrichtung nach außen vorstehende Felgenzentrierung 30 ist als Rohrende ausgebildet, sodass an einer Innenwandung der Felgenzentrierung 30 ein Gewinde ausgebildet sein kann.

In das Innengewinde der Felgenzentrierung 30 greift ein Außengewinde 220 einer Zentralschraube 200 ein. Der Schraubenkopf der Zentralschraube 200 weist eine Anlagefläche 210 auf, welche gegen eine äußere Fläche des Zentralbereichs 410 einer Felge 400 anliegt.

Ferner ist in Fig. 1 eine Bremsscheibe 300 mit einem Bremsscheibentopf 310 dargestellt. Im zusammengebauten Zustand wird der Bremsscheibentopf 310 und der zentrale Bereich 410 der Felge 400 zwischen der Anlagefläche 210 der Zentralschraube 200 und der in Axialrichtung nach außen gerichteten Fläche des Flansches 20 fixiert, das heißt verklemmt.

Der Zentralbereich 410 der Felge 400 weist eine Zentrierfläche 420 auf, welche in Kontakt mit der in Radialrichtung nach außen stehenden Fläche der Felgenzentrierung 30 ist, wenn die Felge montiert ist. Die zu der Axialverzahnung 100 korrespondierende Verzahnung an dem Zentralbereich 410 der Felge ist in Fig. 1 nicht explizit dargestellt, ist jedoch erfindungsgemäß der Axialverzahnung 100 gegenüberliegend an dem Zentralbereich 410 der Felge ausgebildet. Entsprechend wird im montierten Zustand die Verzahnung an der Felge in die Axialverzahnung an der Felgenzentrierung gedrückt, wodurch eine spielfreie Verbindung bereitgestellt wird.

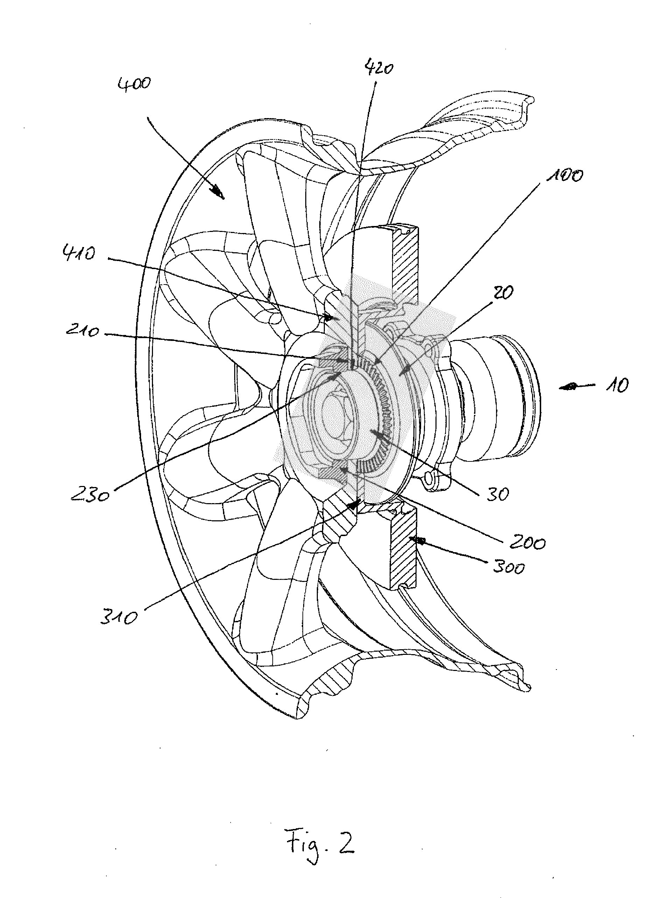

Fig. 2 zeigt eine Radlager-Baugruppe mit einer Achse 10, einem Flansch 20, einer Felgenzentrierung 30 und einer Axialverzahnung 100, wobei hier die Axialverzahnung 100 auf der in Axialrichtung nach außen gerichteten Fläche des Flansches 20 angeordnet bzw. ausgebildet ist.

Gemäß dieser Ausführungsform ist die Stirnfläche der Felgenzentrierung 30 nicht als Verzahnung ausgebildet, so dass eine Zentralmutter 200 verwendet werden kann. Eine Anlagefläche 210 der Zentralmutter 200 liegt an einer äußeren Fläche des Zentralbereichs 410 der Felge 400 an. An einer Innenfläche der Zentralmutter 200 ist ein Gewinde 230 ausgebildet, welches in ein Außengewinde eingreift, das auf der Felgenzentrierung 30 ausgebildet ist. Durch ein Festziehen der Zentralmutter 200 kann der Zentralbereich 410 gegen den Flansch 20 und damit eine Verzahnung an dem Zentralbereich in die Axialverzahnung 100 gedrückt werden, wodurch eine spielfreie Momentenübertragung gewährleistet werden kann.

Auch in dieser Ausführungsform weist der Zentralbereich 410 eine Zentrierfläche 420 zur Anlage an der Felgenzentrierung 30 auf. Ferner ist eine Bremsscheibe 300 dargestellt, wobei der Bremsscheibentopf 310 zusammen mit dem Zentralbereich 410 der Felge mittels der Zentralmutter 200 an dem Flansch 20 fixiert werden kann.

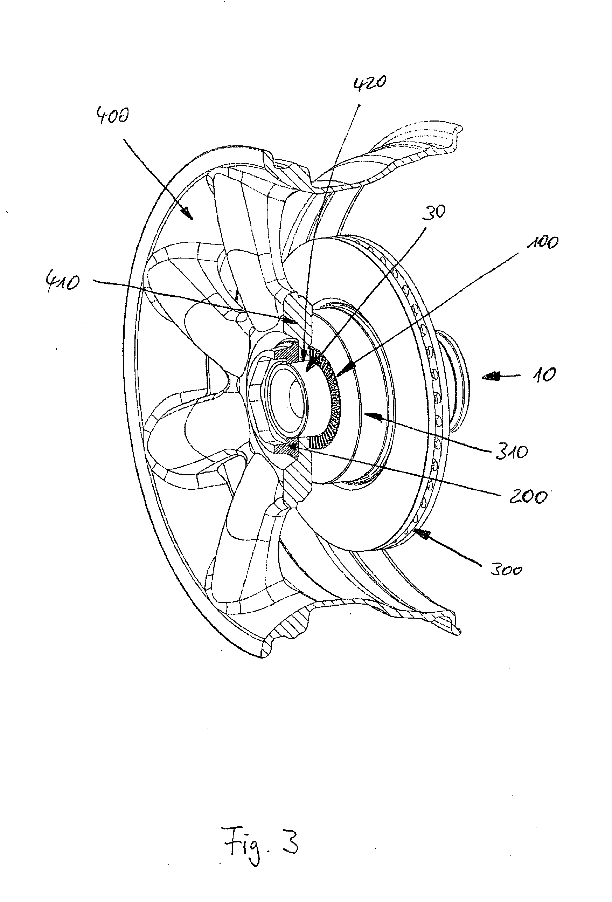

In Fig. 3 ist eine weitere Ausführungsform dargestellt. Hierbei ist die Axialverzahnung 100 an der in Axialrichtung nach außen gerichteten Fläche des Bremsscheibentopfes 310 der Bremsscheibe 300 ausgebildet. In diesem Fall kann die Bremsscheibe 300 auf der Achse 10 so montiert werden, dass der Bremsscheibentopf 310 in radialer Richtung auf dem Felgenzentrierungsbereich 30 ausgerichtet ist.

Eine Felge 400 mit einem Zentralbereich 410 kann nun ebenfalls auf die Felgenzentrierung 30 aufgeschoben werden, so dass die Zentrierfläche 420 eine radiale Ausrichtung der Felge gewährleistet. Auch gemäß dieser Ausführungsform wird der Zentralbereich 410 sowie der Bremsscheibentopf mittels einer Zentralmutter 200 auf der Achse der Radlager-Baugruppe fixiert und gleichzeitig eine Verzahnung an der Felge in Eingriff mit der Axialverzahnung an dem Bremsscheibentopf gebracht und die beiden Verzahnungen zusammengedrückt.

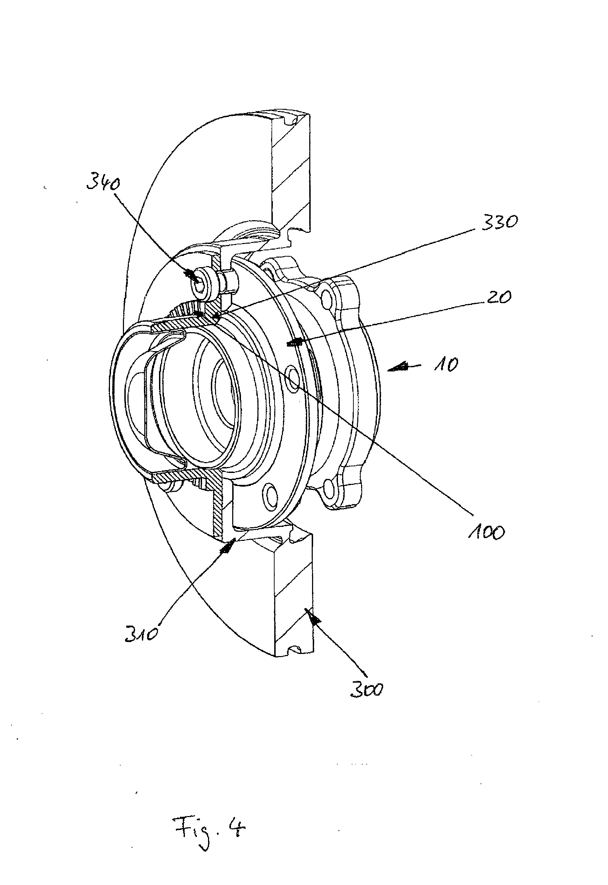

Fig. 4 zeigt eine weitere Ausführungsform einer Radlager-Baugruppe. Auch hier weist die Achse 10 einen Flansch 20 auf, an welchem ein Bremsscheibentopf 310 einer Bremsscheibe 300 montiert werden kann.

Diese Ausführungsform zeichnet sich dadurch aus, dass ein Adapter in Form eines Zylinders mit einem nach außen ragenden Flansch gegen die Außenfläche des Bremsscheibentopfes 310 anliegt. Die Bremsscheibe sowie der Adapter 330 kann mittels Bolzen 340 an dem Flansch 20 befestigt werden. Auf einer in Axialrichtung nach außen gerichteten Fläche des Adapters, insbesondere des Flansch-Abschnittes des Adapters, ist gemäß dieser Ausführungsform die Axialverzahnung 100 vorgesehen. Sobald eine Felge auf dieser Radlager-Baugruppe montiert wird, kann eine Verzahnung, welche korrespondierend zu der Axialverzahnung 100 an dem Zentralbereich der Felge ausgebildet ist, in Eingriff mit der an dem Adapter ausgebildeten Axialverzahnung 100 in Eingriff gebracht werden.

Die Momentenübertragungsstelle bildet damit eine auf dem Radflansch und der Radfelge aufgebrachte Axialverzahnung. Diese Verzahnung lässt sich über einen Guss-, Umformprozess oder auch durch mechanische Bearbeitung in den jeweiligen Verzahnungspartnern einbringen. Wie gemäß der verschiedenen Ausführungsformen oben beschrieben, kann die Axialverzahnung in verschiedenen Positionen am Radflansch angebracht werden. Die Zähneanzahl und Größe ist von der Höhe der zu übertragenden Momente abhängig und wird entsprechend einer beabsichtigten Anwendung ausgelegt. Die Zentralschraube kann sowohl mit Innen- als auch Außenvielkant ausgeführt sein, um ein Festziehen bzw. Lösen der Zentral-Verschraubung mittels eines geeigneten Werkzeuges zu ermöglichen.

Die Radlager-Baugruppe gemäß der Erfindung sowie die Felge mit korrespondierender Verzahnung sind für alle Radlagergenerationen denkbar. Es wird jedoch angemerkt, dass es bei der Räder- bzw. Felgen-Montage aufgrund einer Überbestimmung wichtig ist, dass die Felgenanlage zur Bremsscheibe vorauseilt, bevor die Verzahnung auf Block sitzt. Hierdurch wird die Felgenanlage an die Bremsscheibe gewährleistet. Dies kann durch eine leichte Schiefstellung (Tellern) der Felgenanlagefläche nach außen erreicht werden, wodurch ein Tellerfedereffekt bewirkt wird.

Während die Erfindung illustriert und beschrieben wurde im Detail in den Zeichnungen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarte Ausführungsform beschränkt ist.

Andere Variationen der offenbarten Ausführungsformen, insbesondere der Ausführungsformen der Radlager-Baugruppe, können durch einen Fachmann beim Umsetzen der beanspruchten Erfindung verstanden und bewirkt werden aus einem Studium der Zeichnungen, der Offenbarung und der anhängigen Ansprüche. In den Ansprüchen schließt das Wort "aufweisend" nicht andere Elemente aus und der unbestimmte Artikel "ein" schließt eine Mehrzahl nicht aus. Alleinig der Umstand, dass bestimmte Merkmale in verschiedenen abhängigen Ansprüchen genannt sind, beschränkt nicht den Gegenstand der Erfindung. Auch beliebige Kombinationen dieser Merkmale können vorteilhaft eingesetzt werden. Die Bezugszeichen in den Ansprüchen sollen nicht den Umfang der Ansprüche beschränken.

### Bezugszeichenliste

- 10: Achse
- 20: Flansch
- 30: Felgenzentrierung
- 100: Axialverzahnung
- 200: Zentralmutter/-schraube
- 210: Anlagefläche
- 220: Außengewinde
- 230: Innengewinde
- 300: Bremsscheibe
- 310: Bremsscheibentopf
- 330: Adapter
- 340: Bolzen
- 400: Felge
- 410: Zentralbereich
- 420: Zentrierfläche

## Patentansprüche

1. Radlager-Baugruppe für ein Fahrzeug, aufweisend:
einen Flansch (20) zur axialen Ausrichtung einer Felge (400),
eine Felgenzentrierung (30) zur radialen Zentrierung der Felge (400), wobei die Felgenzentrierung eine radial nach außen stehende Fläche aufweist, die mit einer Zentrierfläche (420) der Felge in Kontakt ist, wenn die Felge montiert ist, und
eine Axialverzahnung (100), welche derart an der Radlager-Baugruppe angeordnet ist, dass die Axialverzahnung in Eingriff mit einer Verzahnung ist, welche an
einem Zentralbereich (410) der Felge ausgebildet ist, wenn die Felge montiert ist, **dadurch gekennzeichnet, dass** die Axialverzahnung (100) an einer Stirnfläche der Felgenzentrierung (30) ausgebildet ist.

2. Radlager-Baugruppe nach Anspruch 1, ferner eine Zentralschraube (200) zur Befestigung der Felge (400) an der Radlager-Baugruppe aufweisend, wobei ein Außengewinde der Zentralschraube in ein Innengewinde eingreift, welches in der Felgenzentrierung (30) ausgebildet ist.

3. Radlager-Baugruppe nach Anspruch 1, ferner eine Bremsscheibe (300) mit einem Bremsscheibentopf (310) aufweisend.

4. Felge (400) für ein Rad eines Fahrzeugs mit einer Radlager-Baugruppe nach Anspruch 1, mit einem Zentralbereich (410), welcher derart ausgebildet ist, dass die Felge an einem Flansch (20) der Radlager-Baugruppe in axialer Richtung und an einer Felgenzentrierung (30) der Radlager-Baugruppe in radialer Richtung ausrichtbar ist, wobei an dem Zentralbereich eine Verzahnung ausgebildet ist, welche in Eingriff mit einer an der Radlager-Baugruppe ausgebildeten Axialverzahnung (100) bringbar ist.

## Claims

1. Wheel bearing assembly for a vehicle, having:
a flange (20) for the axial orientation of a rim (400),
a rim centring means (30) for radial centring of the rim (400), the rim centring means having a face which lies radially on the outside and is in contact with a centring face (420) of the rim when the rim is mounted, and
an axial toothing system (100) which is arranged on the wheel bearing assembly in such a way that the axial toothing system is in engagement with a toothing system which is formed on a central region (410) of the rim when the rim is mounted, **characterized in that** the axial toothing system (100) is formed on an end face of the rim centring means (30).

2. Wheel bearing assembly according to Claim 1, having, furthermore, a central screw (200) for fastening the rim (400) to the wheel bearing assembly, an external thread of the central screw engaging into an internal thread which is formed in the rim centring means (30).

3. Wheel bearing assembly according to Claim 1, having, furthermore, a brake disc (300) with a brake disc chamber (310).

4. Rim (400) for a wheel of a vehicle having a wheel bearing assembly according to Claim 1, having a central region (410) which is configured in such a way that the rim can be oriented on a flange (20) of the wheel bearing assembly in the axial direction and on a rim centring means (30) of the wheel bearing assembly in the radial direction, a toothing system which can be brought into engagement with an axial toothing system (100) which is formed on the wheel bearing assembly being formed on the central region.

## Revendications

1. Ensemble de palier de roue pour un véhicule, comprenant :
une bride (20) pour l'orientation axiale d'une jante (400),
un moyen de centrage de jante (30) pour le centrage radial de la jante (400), le moyen de centrage de jante comprenant une surface située radialement à l'extérieur, laquelle est en contact avec une surface de centrage (420) de la jante, lorsque la jante est montée, et
une denture axiale (100), laquelle est disposée sur l'ensemble de palier de roue de telle sorte que la denture axiale s'engrène avec une denture qui est réalisée sur une région centrale (410) de la jante, lorsque la jante est montée, **caractérisé en ce que** la denture axiale (100) est réalisée sur une surface frontale du moyen de centrage de jante (30).

2. Ensemble de palier de roue selon la revendication 1, comprenant en outre une vis centrale (200) pour la fixation de la jante (400) sur l'ensemble de palier de roue, un filetage extérieur de la vis centrale s'engageant dans un filetage intérieur qui est réalisé dans le moyen de centrage de jante (30).

3. Ensemble de palier de roue selon la revendication 1, comprenant en outre un disque de frein (300) pourvu d'une nacelle de disque de frein (310).

4. Jante (400) pour une roue d'un véhicule comprenant un ensemble de palier de roue selon la revendication 1, comprenant une région centrale (410), laquelle est réalisée de telle sorte que la jante puisse être orientée sur une bride (20) de l'ensemble de palier de roue dans la direction axiale et sur un moyen de centrage de jante (30) de l'ensemble de palier de roue dans la direction radiale, une denture étant réalisée sur la région centrale, laquelle peut être amenée à s'engrener avec une denture axiale (100) réalisée sur l'ensemble de palier de roue.
